# EUROPEAN PATENT APPLICATION

(11) **EP 1 477 825 A1**
(43) Date of publication of application: **17.11.2004**
(21) Application number: 03009900.6
(22) Date of filing: 16.05.2003
(51) Int. Cl.: G01S 5/00, G01S 5/14

(54) **Method and system for determining the trajectory and the position of a mobile object with a transceiver**

(71) Applicant: Dubouloz, Benoit, 1254 Jussy (CH); Blardone, Camille, 1020 Renens (CH)
(72) Inventor: Dubouloz, Benoit, 1254 Jussy (CH); Blardone, Camille, 1020 Renens (CH)
(74) Representative: Grosfillier, Philippe

(57) **Abstract**

The invention concerns trajectory and position determining method for one mobile object. A system with at least a signal receiver/emitter and a micro-controller and signal emitting/receiving stations is needed to carry out the following steps:
(a) Activation of the signal receiver/emitter and of the micro-controller before said object starts moving and identification of said object.
(b) Reception by said signal receiver/emitter of the object of a tracking signal emitted by said emitting/receiving stations during motion of said object.
(c) Memorization of said received tracking signal by said object during motion.
(d) Transfer of said memorized tracking signal to a central unit either during motion of said object or once the motion has stopped.
(e) Analysis of the transferred tracking signal by said central unit to determine the trajectory and the position of said object.
(f) Reproduction of the determined trajectory and position in 2D or 3D.

## Description

### Field of the invention

The present invention concerns a trajectory and position determining method for at least one mobile object

The present invention also concerns a system for determining the trajectory and the position of at least one mobile object

### Prior art

Tracking and positioning methods and devices are known in the prior art for example for tracking the position of cars or boats and other mobile objects. Known technologies include camera imaging devices and Doppler effect based systems. Another technology in this technical field uses GPS signals to perform such tracking and positioning processes.

The NAVSTAR GPS is a passive, satellite-based, navigation system. Its primary mission is to provide passive global positioning/navigation for land-, air-, and sea-based strategic and tactical forces. A GPS receiver is simply a range measurement device; distances are measured between the receiver antenna and the satellites, and the position is determined from the intersections of the range vectors. These distances are determined by a GPS receiver, which precisely measures the time it takes a signal to travel from the satellite to the station.

There are basically two general operating modes from which GPS derived positions can be obtained: absolute positioning and relative or differential positioning. Within each of these two modes, range measurements to the satellites can be performed by tracking either the phase of the satellite's carrier signal or the pseudo-random noise codes modulated on the carrier signal. In addition, GPS positioning can be performed with the receiver operating in a static or dynamic environment. This variety of operational options results in a wide range of accuracy levels, which may be obtained from the NAVSTAR GPS. Accuracies can range from 100m down to the subcentimeter level. Increased accuracies to the subcentimeter level require additional observing time and, until recently, could not be achieved in real time. Selection of a particular GPS operating and tracking mode (i.e., absolute, differential, code, carrier, static, kinematic, or combinations thereof) depends on the user application.

The most common military and civil (i.e., commercial) application of GPS is "absolute positioning" for real-time navigation. When operating in this passive, real-time navigation mode, ranges to NAVSTAR satellites are observed by a single receiver positioned on a point for which a position is desired. This receiver may be positioned to be stationary over a point or in motion. Two levels of absolute positioning accuracy may be obtained from the NAVSTAR GPS. These are called the (1) Standard Positioning Service (SPS) and (2) Precise Positioning Service (PPS). Since May 1^{st} 2000, the "Selective Availability" has been turned off, providing the PPS service to all GPS users. While with SPS, the user was able to achieve real-time 3D absolute point positioning on the order of 100 m. Real-time 3D absolute positional accuracies of 16-20 m are attainable through use of the PPS.

Differential or relative positioning is simply a process of measuring the differences in coordinates between two receiver points, each of which is simultaneously observing/measuring satellite code ranges and/or carrier phases from the NAVSTAR GPS constellation. The process actually involves the measurement of the difference in ranges between the satellites and two or more ground observing points. The range measurement is performed by a phase difference comparison, using either the carrier phase or code phase. The basic principle is that the absolute positioning errors at the two receiver points will be approximately the same for a given instant. The resultant accuracy of these coordinate differences is at the meter level for code phase observations and at the centimeter level for carrier phase tracking. These coordinate differences are usually expressed as 3D "baseline vectors," which are comparable to conventional survey azimuth/distance measurements. Differential GPS (DGPS) positioning can be performed in either a static or kinematic mode.

Absolute positioning, as discussed earlier, will not provide the accuracies needed due to existing and induced errors. In order to eliminate these errors and obtain higher accuracies, GPS can be used in a relative positioning mode. The terms "relative" and "differential" used throughout this document have similar meaning. "Relative" will be used when discussing one thing in relation to another. The term "differential" will be used when discussing the technique of positioning one thing in relation to another.

Differential or relative positioning requires at least two receivers set up at two stations (usually one is known) to collect satellite data simultaneously in order to determine coordinate differences. This method will position the two stations relative to each other (hence the term "relative positioning") and can provide the accuracies required for basic land surveying and hydrographic surveying.

Differential positioning using code pseudo-ranges results in absolute coordinates of the user on the earth's surface. Errors in range are directly reflected in resultant coordinate errors. Differential positioning is not so concerned with the absolute position of the user but with the relative difference between two user positions, which are simultaneously observing the same satellites. Since errors in the satellite position (Xs, Ys, and Zs) and atmospheric delay estimates d are effectively the same (i.e., highly correlated) at both receiving stations, they cancel each other to a large extent.

For example, if the true pseudo-range distance from a known control point to a satellite is 100 m and the observed or measured pseudo-range distance was 92 m, then the pseudo-range error or correction is 8 m for that particular satellite. A pseudo-range correction or PRC can be generated for each satellite being observed. If a second receiver is observing at least four of the same satellites and is within a reasonable distance (300 km) it can use these PRCs to obtain a relative position to the known control point since the errors will be similar. Thus, the relative distance (i.e., coordinate difference) between the two stations is relatively accurate (i.e., within 0.5-5 m) regardless of the poor absolute coordinates. In effect, the GPS observed baseline vectors are no different from azimuth/distance observations. As with a total station, any type of initial coordinate reference can be input to start the survey.

The absolute GPS coordinates will not coincide with the user's local project datum coordinates. Since differential survey methods are concerned only with relative coordinate differences, disparities with a global reference system used by the NAVSTAR GPS are not significant. Therefore, GPS coordinate differences can be applied to any type of local project reference datum (i.e., NAD 27, NAD 83, or any local project grid reference system).

Code pseudo-range tracking has primary application to real-time navigation systems where accuracies at the 0.5- to 5-m level are tolerable. Given these tolerances, engineering survey applications of code pseudorange tracking GPS are limited, with two exceptions being hydrographic survey and dredge positioning.

Differential positioning using carrier phase tracking also uses a formulation of pseudo-ranges. The process becomes somewhat more complex when the carrier signals are tracked such that range changes are measured by phase resolution. In carrier phase tracking, an ambiguity factor is added to the pseudo-range observation, which must be resolved in order to obtain a derived range. Carrier phase tracking provides for a more accurate range resolution due to the short wavelength (approximately 19 cm for L1 and 24 cm for L2) and the ability of a receiver to resolve the carrier phase down to about 2 mm. This method, therefore, has primary application to engineering, topographic, and geodetic surveying, and may be employed with either static or kinematic methods. There are several techniques, which use the carrier phase in order to determine station's position. These include static, rapid static, kinematic, stop and go kinematic, pseudo kinematic, and realtime kinematic (RTK) and on-the-fly (OTF) kinematic. The concepts of these techniques are explained below. Table 1 lists these techniques, their associated accuracies, applications, and required components.

Static surveying is the most widely used differential technique for control and geodetic surveying. It involves long observation times (1-2 hr, depending on number of visible satellites) in order to resolve the integer ambiguities between the satellite and the receiver. Accuracies in the subcentimeter range can be obtained from using the static method.

The concept of rapid static is to measure baselines and determine positions in the centimeter level with short observation times, 5-20 min. The observation time is dependent on the length of the baseline and number of visible satellites. Loss of lock, when moving from one station to the next, can also occur since each baseline is processed independent of each other.

Kinematic surveying, allows the user to rapidly and accurately measure baselines while moving from one point to the next. The data are collected and post-processed to obtain accurate positions to the centimeter level. This technique permits only partial loss of satellite lock during observation and requires a brief period of static initialization. The OTF technology, both real-time and post-processed, could eventually replace standard kinematic procedures at least for short baselines.

Stop and go kinematic involves collecting data for several minutes (1-2 min.) at each station after a period of initialization to gain the integers. This technique does not allow for loss of satellite lock during the survey. If loss of satellite lock does occur, a new period of initialization must take place. This method can be performed with two fixed or known stations in order to provide redundancy and improve accuracy.

Pseudo-kinematic is similar to standard kinematic procedures and static procedures combined. The differences are that there is no static initialization, longer period of time at each point (approximately 1-5 min), each point must be revisited after about an hour, and loss of satellite lock is acceptable. The positional accuracy is more than for kinematic or rapid static procedures, which makes it a less acceptable method for establishing baselines.

RTK and OTF carrier phase based positioning determination uses GPS technology to allow the positioning to a subdecimeter in real time. This system determines the integer number of carrier wavelengths from the GPS antenna to the GPS satellite, transmitting them while in motion and without static initialization. The basic concept behind the OTF/RTK system is kinematic surveying without static initialization (integer initialization is performed while moving) and allows for loss of satellite lock. Other GPS techniques that can achieve this kind of accuracy require static initialization while the user is not moving and no loss of satellite lock while in motion.

**Table 1:**

| **Carrier Phase Tracking Techniques** | | | |
|---|---|---|---|
| **Concept** | **Requirements** | **Applications** | **Accuracy** |
| Static (Post-processing) | • L1 or L1/L2 GPS receiver • PC for post-processing • 45 min - 1 hr observation time¹ | • Control surveys (that require high accuracy) | **•** Subcentimeter level |
| Rapid static (Post-processing) | • L1/L2 GPS receiver • 5-20 min observation time¹ | • Control surveys (that require medium to high accuracy) | • Subcentimeter level |
| Kinematic² (Post-processing) | • L1 GPS receiver with kinematic survey option • PC for post-processing | • Continuous topo • Location surveys | • Centimeter level |
| Stop-and-Go Kinematic² (Post-processing) | • L1 GPS receiver • PC for post-processing | • Medium accuracy control surveys | • Centimeter level |
| Pseudo Kinematic² (Post-processing) | • L1 GPS receiver • PC for post-processing | • Medium accuracy control surveys | • Centimeter level |
| Real-time kinematic/OTF kinematic³ (Real-time or post-processing) | For post-processing: • L1/L2 GPS receiver • PC For real-time: • Internal or external processor • Min. 4800 baud radio modem/data link set | • Real-time high accuracy hydro surveys • Location surveys • Medium accuracy control surveys • Photo control • Continuous topo | • Subdecimeter level |

| | | | |
|---|---|---|---|
| 1 Dependent on satellite constellation and number of satellites in view. | | | |
| 2 Initialization period required and loss of satellite lock is not tolerated. | | | |
| 3 No static initialization necessary, integers gained while moving, and loss of satellite is tolerated. | | | |

The error sources encountered in the position determination using differential GPS positioning techniques are the same as those for absolute GPS positioning. In addition to these error sources, the user must ensure that the receiver maintains lock on at least three satellites for 2D positioning and four satellites for 3D positioning. When loss of lock occurs, a cycle slip (a discontinuity of an integer number of cycles in the measured carrier beat phase as recorded by the receiver) may occur. In GPS absolute surveying, if lock is not maintained, positional results will not be formulated. In GPS static surveying, if lock is not maintained, positional results may be degraded, resulting in incorrect formulations. Sometimes, in GPS static surveying, if the observation period is long enough, postprocessing software may be able to average out loss of lock and cycle slips over the duration of the observation period and formulate positional results that are adequate; if this is not the case, reoccupation of the stations may be required. In all differential surveying techniques, if loss of lock does occur on some of the satellites, data processing can continue easily if a minimum of four satellites have been tracked. Generally, the more satellites tracked by the receiver, the more insensitive the receiver is to loss of lock. In general, cycle slips can be repaired.

There are two levels of accuracies obtainable from GPS using differential techniques. The first level is based on pseudo-range formulations, while the other is based on carrier beat phase formulations.

Pseudo-range formulations can be developed from either the C/A-code or the more precise P-code. Pseudo-range accuracies are generally accepted to be 1 percent of the period between successive code epochs. Use of the P-code where successive epochs are 0.1 µs apart produces results that are around 1 percent of 0.1 µs or 1 ns. Multiplying this value by the speed of light gives a theoretical resultant range measurement of around 30 cm. If using pseudo-range formulations with the C/A-code, one can expect results 10 times less precise or a range measurement precision of around 3 m. Point positioning accuracy for a differential pseudorange formulated solution is generally found to be in the range of 0.5-10 m. These accuracies are largely dependent on the type of GPS receiver being used.

Carrier beat phase formulations can be based on either the L1 or L2, or both carrier signals. Accuracies achievable using carrier beat phase measurement are generally accepted to be 1 percent of the wavelength. Using the L1 frequency where the wavelength is around 19 cm, one can expect a theoretical resultant range measurement that is 1 percent of 19 cm, or about 2 mm. The L2 carrier can only be used with receivers that employ a cross correlation, squaring, or some other technique to get around the effects of A/S.

The final positional accuracy of a point determined using differential GPS survey techniques is directly related to the geometric strength of the configuration of satellites observed during the survey session. GPS errors resulting from satellite configuration geometry can be expressed in terms of DOP. Positional accuracy for a differential carrier beat phase formulated solution is generally found to be in the range of 1-10 mm.

In addition to GDOP, PDOP, HDOP, and VDOP, the quality of the baselines produced by GPS differential techniques (static or kinematic) through carrier phase recovery can be defined by a quantity called relative DOP (RDOP). Multiplying the uncertainty of a double difference measurement by RDOP yields the relative position error for that solution. Values of RDOP are measured in meters of error in relative position per error of one cycle in the phase measurement (m/cycle). Knowledge of an RDOP or a value equivalent to it is extremely important to the confidence one assigns to a baseline recovery. Key to understanding RDOP is to remember that it represents position recovery over a whole session of time and is not representative of a position recovery at an instant in time. When carrier phase recovery techniques are used, RDOP values around 0.1 m/cycle are considered acceptable.

Different technical articles report centimeter-level accuracies that were achieved with industrial equipment, see for example the support section in the website of Novatel (www.novatel.com).

US patent 6,327,533, the content of which is incorporated by reference in the present application, discloses an example of an application of GPS signals for continuously locating an object. A smart mobile unit in the object receives and uses GPS satellites positioning data when available and relies on its built-in autonomous navigation capability when GPS is invalid to continuously determine its current position in map-reading units. All position data processing is performed in the smart mobile unit with map-ready outputs stored in history file. The smart mobile unit then transmits the position output using an automatically selected wireless mode of communication to a central processing station for map generation and display processing. Thus a current position of the object is always available from the smart mobile unit.

Another example of a vehicle location system for airborne vehicles is disclosed in international PCT application WO 89/04002, the content of which is incorporated by reference in the present application. The known system incorporates a plurality of ground enhancement stations ad at least one satellite to receive encoded transmissions from a radio transmitter abroad a user vehicle. The satellite transmits the signal received directly from the user and those relayed by the ground enhancement stations to a base station where a computer calculates the position of the user on the basis of the time difference between the time of arrival of the signals.

A further example of a tracking system for multiple movable objects such as supermarket trollies is disclosed in UK application GB 2 283 142, the content of which is incorporated by reference hereto. In this prior art, each movable object transmits a signal which is received by three receiving sites: two fixed and one mobile. The GPS satellite system is utilised to provide timing synchronization between the three receiving sites as well as determining the location of the mobile receive station. The three receiving sites determine when the transmitted signal is received and this timing information is used in combination with the known receiver positions to determine the position of the mobile object.

Another vehicle tracking system employing global positioning system (GPS) satellites is known from European patent application N° 0 512 789.

GPS signals are also used in the field of game playing, for example golf, where the position of a movable object, in this case a golf ball, has to be determined.

As an example, US patent 6,304,211, the content of which is incorporated by reference in the present application, discloses a system and method for measuring distance between two objects using received satellite transmitted data. The application described in this patent concerns the playing of golf and the system is used inter alia to localize the position of a golf ball. The system comprises at least a fixed GPS receiver with a radio located on or in the vicinity of the golf course and a mobile GPS receiver with computer and radio mounted or carried on a golf cart used by a player on the golf course or even carried by said player. In order to calculate the position of the golf ball, in one embodiment, the mobile GPS receiver is positioned at, near or over the golf ball on the fairway. Accordingly, this system only allows static measurements of ball position with the mobile GPS receiver being brought at the golf ball position.

As a further example, US patent 5,507,485 (corresponding to PCT application WO 95/30157), the content of which is incorporated by reference in the present application, discloses a golf computer and a golf replay device. This system uses a cart mounted golf computer having means for automatically ascertaining the position of the cart on the golf course and for automatically updating the geographic display accordingly.

Another system is known from German patent application DE 199 38 761, the content of which is incorporated by reference in the present application. In this publication of the prior art, a computer and a program are used to reconstruct the trajectory of a golf ball. The system comprises at least a portable GPS unit carried by the player which allows the system to detect each time the a ball is hit by the player. By knowing the position on the golf course at which the player successively hits the ball, the computer is able to reconstruct the trajectory of the ball, using as an additional parameter the club to estimate the flight phase of the ball.

However, this system has the disadvantage to only take account of successive rest positions of the golf ball, at which it is hit by the player and of course has a limited accuracy since it has to reconstruct the trajectory of the ball between two successive rest positions of the ball.

### Summary of the invention

It is therefore an aim of the present invention to improve the known positioning methods and systems.

Another aim of the present invention is to improve the known tracking methods and systems.

A further aim of the present invention is to provide an efficient positioning method and system that overcome the limits of the known methods and devices.

A further aim of the invention is to provide a method that can be carried out by simple means having a reduced size.

Still a further aim of the present invention is to provide a positioning/tracking system that has a low cost

Another aim of the present invention is to provide a method and a system that can be used in many applications in particular for the general public, such as security and safety devices, toys, games, ball games etc.

Accordingly, in order to fulfil these aims, the invention proposes to separate the signal acquisition and tracking part from the position computation function. This splitting reduces the computational load in the mobile object, the energy consumption, the space occupation and makes it easier to benefit from the large computing resources on a central PC. The latter can further be updated rapidly without having to reprogram software inside the mobile object. As a consequence, the mobile object will generate a series of pseudo-ranges including carrier phase information that will be analysed by a central unit.

For 10 seconds of data gathering, a target of 10 samples per second, 32-bit pseudo-ranges, 32-bit carrier phase and 12 satellite channels would require a little less then 100 kbits to be transferred, resulting in 2 seconds of transfer time. However, it would be possible to limit the real time transfer to the last position only (i.e. the position after 10 seconds). This would require less than 1 kbit, a fraction of a second to be transferred. The bulk trajectory data of the mobile object could be transferred via a docking station at high speed (e.g. 2Mbit/s USB link) resulting in less then a minute to transfer all acquisitions.

By using the method according to the present invention and a system able to carry out said method, it becomes possible to use very small GPS receivers and emitters that can be placed in small objects with limited space availability. The use of such small GPS receivers, placed directly in the moving object, allows then a direct realistic and effective measurement of the trajectory, and not, as disclosed in the cited prior art, a reconstruction of a hypothetical trajectory.

### Brief description of the drawings

Figure 1 shows a bloc-diagram of the method according to the invention.
Figure 2 shows, in a schematical manner, an embodiment of the invention.
Figure 3 shows a bloc diagram of a mobile object according to the invention.
Figure 4 shows a first cross-sectional view of a mobile object.
Figure 5 shows a second cross-sectional view of a mobile object.

### Detailed description of an embodiment

An embodiment of the invention will be described with reference to a golf game and ball as a non-limiting example, since the principle of the invention can be used in other applications in which the trajectory and position of one or several mobile objects has to be determined with precision.

The aim of the golf ball tracking and positioning system is to be able to determine the trajectory and position of one or several golf balls. The solution should allow providing the golf player with feedback on the latest hit while he or she is on the golf course.

The accuracy of the trajectory is an important factor in the system. While it is true that the trajectory itself can be post-processed to filter outliers, it is important that the indicated position on the course corresponds closely to the real position.

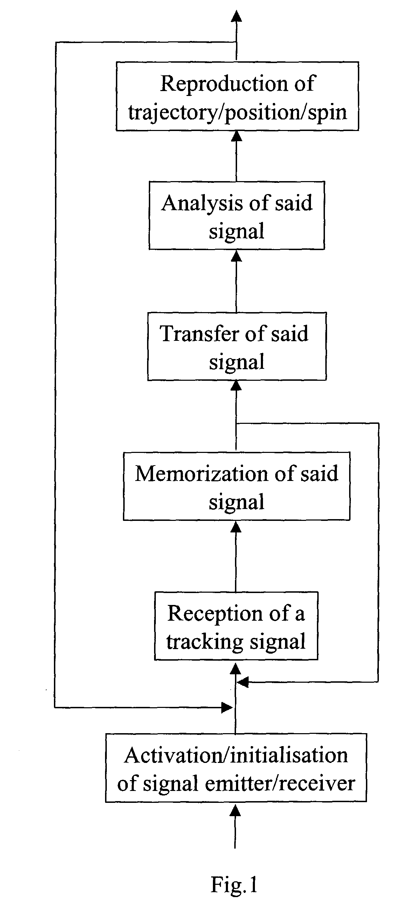

A method according to the invention is characterised by the following steps with reference to figure 1:
1. By default, the golf ball comprising a GPS receiver and radio link is in a sleeping mode. In this mode, both the GPS receiver and the radio link are shut down and the current supply is reduced to a strict minimum (a few micro-amps).
2. If the golf ball is displaced (e.g. turned around) during a number of seconds, for example 2 seconds, the radio link will be activated. This operation could correspond to the procedure of putting the ball on the start to begin the track. During this phase, the golf ball will announce itself to the radio network by broadcasting a unique address. If a connection can be established, the central unit will send the GPS initialisation code (i.e. clock, almanach, satellites that are visible etc.) to the golf ball. During this phase, the system will also measure the golf ball's clock frequency. This is required to reduce the satellite search frequency uncertainty. As a variant, the unique address could be decided by the central unit and then sent to the ball for memorization and identifications purposes.
3. Once the initialisation is finished (a couple of seconds), the GPS receiver is switched on and the golf ball will start to acquire the satellite signals. Once a satellite is acquired, the GPS control loops will start tracking them. However, the golf ball does not yet start generating pseudo ranges and carrier phase information. It just tracks the satellites in order to be ready for the recording of the trajectory. In this mode, it may be possible to apply power reduction techniques that periodically switch off the GPS RF front end to minimize power consumption.
4. An incorporated movement detector detects the start of a ball flight. This will immediately cause the GPS RF front end to be switched on until the ball is back to a rest state again. During this time, the ball will record pseudo-ranges and carrier phases into its internal memory.
5. Once the ball has stopped moving, the GPS receiver is put into a standby state that maintains the satellite locks while reducing total power consumption. Then, the radio link is switched on and the pseudo ranges and carrier phases are transferred to the central unit. Once this transmission is finished, the radio transceiver is switched off.
   As a variant, it is possible that during the motion of the ball, to transmit on a regular basis the pseudo-ranges and carrier phases to the central unit in order to be able to determine in real time the effective position of the ball and not wait until the ball has stopped its motion. This variant will also reduce the need for a large memory in the ball since less information needs to be put in memory. Both possibilities could be proposed to the player and will be implemented by the micro-controller in the ball.
   According to another variant, it could be decided that the pseudo-ranges and carrier phases data is transferred only at the end of a game. This will require a larger memory in the ball but will probably use less energy, since no emission is made during a game.
6. Once the central unit has received the pseudo-range and carrier phase data of the satellite, it will compute the actual position of the golf ball in two-dimensions (2D) or three-dimensions (3D). Once this position is known, it may send trajectory information (range, speed, spin, position etc.) to the player. This transmission can either be done via the radio link (while using a radio device with a display) or via a cell phone communication link as known in the art, whatever is appropriate. In the first case, the golf club could provide these devices to the player.
7. As the golf ball has remained in a standby state, the next hit will cause the repetition of steps 4, 5 and 6.
8. If no satellites are in view during 1 minute for example, the GPS receiver and the radio link can be turned off completely. In this way, the system will automatically save power when the player takes the ball and puts it in his pocket for example while moving to the next hole.
9. The complete trajectory can be downloaded using a docking station with a high-speed link. This will also start the computation of the full trajectory on the central unit or possibly a central dedicated server on the Internet.

Of course, all the steps indicated above occurring in the ball (or in any mobile object using the principle of the invention) are being controlled by a program of the micro-controller which will activate the different functions of the system when needed. The programming of such a micro-controller is known per se in the prior art.

The analysis of the signal received by the central unit (pseudo-range and carrier phase data) is made with known algorithms for treating GPS signals and determining the successive positions of the mobile object. The following articles (incorporated by reference in the present application) describe such algorithms:
- ) Donghyun Kim et al.(2000). "GPS Ambiguity Resolution and Validation: Methodologies, Trends and Issues". Presented at the 7^{th} GNSS Workshop - International Symposium on GPS/GNSS, Seoul Korea, Nov.30-Dec.2, 2000.
- ) Donghyun Kim et al. "An optimized Least-Squares Technique for Improving Ambiguity Resolution and Computational Efficiency". Geodetic Research Laboratory, Department of Geodesy and Geomatics Engineering, University of New Brunswick, Fredericton, N.B., Canada.
- ) G. Lachapelle (2000), "Carrier Phase Measurements Characteristics and Utilization Overview". University of Minnesota IMA Workshop on Mathematical Challenges in GPS, August 16-18, 2000.
- ) Horng-Yue Chen. "An instantaneous Ambiguity Resolution Procedure Suitable for Medium-Scale GPS Reference Station Networks". School of Geomatic Engineering, the University of New South Wales, Sydney, NSW 2052, Australia.

An embodiment of a system is now described in the field of golf playing, in a non-limiting fashion and applicable to other mobile objects.

With the method according to the invention, it becomes possible to determine successive trajectories of a golf ball (mobile object), for example for learning or training purposes. A record of the shots of a player could be kept in the central unit (for example a PC) and used for comparison of the progress of the player. It could of course also be envisaged to use the trajectory and position data collected for different players to compare their respective performance for one given hole on the golf course or on an entire tournament. This principle can of course be applied to other games with mobile objects or moving people. In addition, in the field of golf, once the trajectory of the ball has been determined, it is also possible to reconstruct the spin of the ball for the effective trajectory since the spin has an effect on the trajectory. The algorithms necessary to determine the spin are known per se in the art of golf playing and simulation.

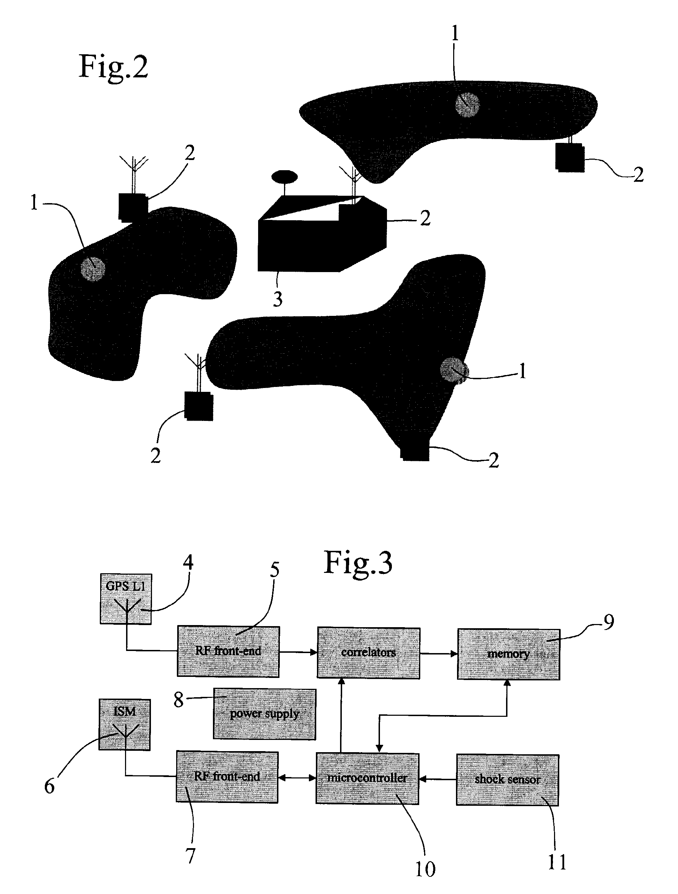

As shown in figure 2, the system according to the invention thus comprises at least one mobile object 1 (a golf ball in the present example), radio links 2 for transmitting the data memorised in the mobile object to a central station 3, for example a personal computer, situated in the green house. According to the method, the ball, when in movement, receives the GPS signal from the GPS satellites (not shown) and saves the data received (pseudo-ranges and carrier phase). Once the ball stops moving, the data put in memory is sent via the radio links 2 to the central unit 3 (for example a PC) for treatment of the signal and determination of the trajectory and position of the ball 1. As mentioned above, according to variants, the data received by the ball could be sent regularly during its motion to the central unit 3 in order to determinate the trajectory in real-time or it could be transmitted to the central unit at the end of the game, once the last hole has been reached.

While the golf ball itself only performs pseudo-range and carrier phase measurements, the essentials of the position computation are performed on the central unit (a PC) and the resources on an ordinary PC is in principle sufficient to perform all the position determination tasks, even for multiple players. This will particularly be the case if only the last position is to be computed directly.

In addition, the central unit itself has to be equipped with a special GPS receiver that allows for accessing the pseudo-ranges and carrier phase data. The position of the central unit's GPS antenna has to be calibrated precisely because it will be used as a local reference in the system.

The central unit is also responsible for the data communication with the golf balls out on the course. This communication should provide the golf ball's GPS receivers with the appropriate satellites to be searched for, the Doppler frequency offsets of these satellites and code numbers. This so-called Assisted-GPS approach eliminates the need for a warming up phase (which can take up to 12.5 minutes) before using the system.

The central unit 3 will also keep track of balls in play and allow for check-in/check-out features, for example when attributing a unique address to a ball or deleting the address attributed to a ball.

The radio links 2 will transmit the GPS pseudo ranges and carrier phases as determined by the GPS receiver in the ball. This radio link should preferably operate in the unlicensed ISM-band. In order to achieve a sufficiently long transmission range, a narrow-band radio is preferred. These radio types are more sensitive and therefore manage to achieve transmission ranges that may reach 1 km or even more (dependent on antennas). However, the bandwidth of a narrow-band radio is far below the bandwidth that can be obtained with wide-band radios.

It is possible to obtain the radio coverage on a full golf course by means of radio relay units.

The radio link can be implemented using a CSCD/MA (Carrier Sense Carrier Detect/Multiple Access mechanism combined with an adequate signal-encoding scheme to allow for fast signal detection. The advantage of this approach is that it provides a natural sharing of the available bandwidth in a similar way as Ethernet. However, other approaches could eventually be implemented (e.g. frequency hopping) for this function.

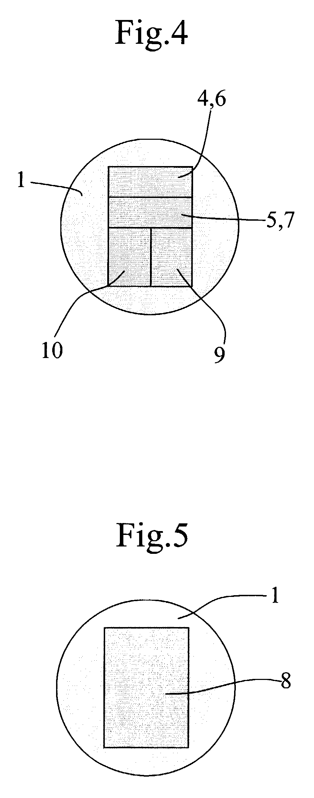

An embodiment of a mobile unit is described with reference to figures 3 to 5. The mobile object, for example a golf ball 1, houses a GPS front-end 4, 5, a radio transceiver 6, 7 and power supply 8. A local memory 9 is included to save the pseudo-range and carrier phase information during motion. These elements are preferably controlled by a small micro-controller 10 to handle all the functions. Preferably, the GPS receiver does not include any position calculation function or almanac and ephemeris data collection. Instead, the receiver is preferably preset with the required satellite numbers to be searched for and at which particular frequency. The mobile object may provide a ready signal via the radio link to indicate that at least 4 satellites are being tracked (if required).

The operation of the radio transceiver is likely to be alternated with the GPS receiver part. However, both units may operate simultaneously without disturbing each other. The mode of functioning is managed by the micro-controller.

A shock detector 11 could be included inside the mobile object, if said object is a ball (i.e. a golf ball) to be able to start the recording of the GPS data after the object has been hit. It may further be practical to include some kind of a user interface (for example LEDs) on the object.

The antenna used is preferably omni-directional, as the orientation of the ball is not known beforehand. Examples of suitable antennas include monochip ceramic antenna for GPS, reference (using the 12NC code) 4311 212 09158 of the company PHYCOMP, or the antenna commercialised under the reference SPK-I-1575D of the company S.P.K. Electronics CO. LTD, Taiwan.

With an average of 5 shots per hole and an 18-hole golf course, almost 100 shots need to be stored inside the ball's memory before downloading the data. As stated before, each shot may generate almost 100kbit of data, the total sums up to 10Mbit (1.2Mb). Of course, if the data is transferred in real time, this value could be reduced.

However, this requirement can be loosened a little for several reasons:
1. It is very unlikely to have 12 satellites (and 12 pseudo-ranges and carrier phases) in view. Only 4 satellites are required to be able to position the ball. The central unit can make the optimal choice for the best satellites to choose.
2. Instead of recording the full pseudo-ranges and carrier phases, it will be possible to store only the change in pseudo-range and carrier phase. If the recording interval is approximately known, far less bits are required then. It is therefore possible only to store 16 bits of code and carrier phase, thus reducing the memory requirements by 2.

Taking these two points into consideration, an average of 6 satellites will lead to a total of 10 (seconds) x 10 (recordings per second) x 32 (bits per recording) x 6 (satellites in view) x 100 (shots per hole) = 1.92 Mbit. This could be handled by a µPD442000A 2Mbits low power SRAM from NEC (size 8mm x 13.4mm, active current 15-30mA). It would take a little more than one second to download this data via a USB link. An USB link, for example or other similar means, could be installed at the central unit for downloading the entire data stored during the golf play (if this variant is chosen) and for determination and reproduction of the entire game, or even comparison of the respective games of different golfers or successive games of the same golfer. Accordingly, the system could be used for active training and learning purposes of a golfer or comparisons during competitions and tournaments, even in real time. Of course, the data can also be stored in real time when transmitted during the golf play and the comparison can be made in real-time. It could also be envisaged to create a database containing the data of each player for this purpose.

The current drain of the GPS receiver will mainly determine the total power consumption, and thus the autonomy of the golf ball. The radio link is only used occasionally for a short period of time and will therefore add on only for a small fraction to the total energy balance. A state of the art low power GPS receiver will require approximately 50mA of current drain (150mW @ 3V), including the microcontroller and the external memory. With a total of 100 shots of each 10 seconds each, the total on-time will be 1000 seconds. With a supply voltage of 3 Volt, The capacity required for this is therefore approximately 15mAh. It is further feasible to realize a standby mode that will require an average of 5mA. If a full golf course takes 5 hours, this would yield an additional 25mAh.

Preferably, a battery with a capacity of at least 50mAh is used. The smallest standard rechargeable batteries that are provided by Renata are 180mAh and have a physical size of 5.3mm x 20.0mm x 26.9mm and the weight is 6g. In terms of volume, it would represent 13% of the total target weight of the ball. Other batteries could of course be envisaged.

Although the example described above relates to a golf ball tracking system, the principle of the invention can be applied to other mobile objects placed in a given space in order to track their effective trajectory and position. Another application could be in the field of tennis or football: using the principles of the invention, it would be possible control the trajectory of the ball, respectively balloon, in real time. Another application could be in the sports field to track the trajectory and position of a competitor, such a skier, for learning and comparison purposes. A further application could be in the field of safety devices to track the position of a moving person (for examples children, lost people, even convicted people that must remain in a predetermined area). The system could be integrated in a watch or a shoe or another piece of equipment.

## Claims

1. A trajectory and position determining method for at least one mobile object in a system with at least a signal receiver/emitter and a micro-controller and signal emitting/receiving stations, **characterised by** the following steps:
(a) activation of the signal receiver/emitter and of the micro-controller before said mobile object starts moving and identification of said mobile object;
(b) reception by said signal receiver/emitter of the object of a tracking signal emitted by said emitting/receiving stations during motion of said object;
(c) memorization of said received tracking signal by said object during motion;
(d) transfer of said memorized tracking signal to a central unit either during motion of said object or once the motion has stopped;
(e) analysis of the transferred tracking signal by said central unit to determine the trajectory and the position of said mobile object;
(f) reproduction of the determined trajectory and position in 2D or 3D.

2. A method as claimed in claim 1, wherein the tracking signal is a GPS signal.

3. A method as claimed in claim 2, wherein said analysis of said tracking signal comprises the steps of determining pseudo ranges and carrier phases of said GPS signal.

4. A method as claimed in one of claims 1 to 3, wherein data corresponding to said determined trajectory and position is transferred to a mobile display, such as a cell phone.

5. A method as claimed in one of the preceding claims, wherein said mobile object effects several successive movements, each generating successive tracking signals that are successively analysed and memorized.

6. The method as claimed in one of the preceding claims, wherein several mobile objects are individually identified, wherein the trajectory and position of each mobile object is determined and reproduced individually or together.

7. A system for determining the trajectory and the position of at least one mobile object (1), wherein said system comprises at least signal emitting stations, a fixed reference signal emitting/receiving station (2) with a known position, a signal receiving/emitting mobile unit (4,5,6,7) in said mobile object (1) further comprising memory means (9) and an energy source (8), and a central calculating unit (3), wherein said mobile unit (1) is able to receive and memorize a trajectory and position signal received from said signal emitting stations via said signal receiving means (4,5), to transmit said signal via said signal emitting means (6,7) to said central calculating unit (3), wherein said central calculating unit (3) analyses said signal and reproduces the determined trajectory and position of the mobile object (1) in 2D or 3D.

8. A system as claimed in claim 7, wherein said signal emitting stations are GPS satellites and said trajectory and position signal is a GPS signal.

9. A system as claimed in one of claims 7 or 8, wherein said trajectory and position is reproduced on a display.

10. A system as claimed in one of claims 7 to 9, wherein several successive trajectories and positions of the same or of different mobile object (1) are reproduced on a display.

11. A system as claimed in one of claims 7 to 10, wherein said mobile object is a person.

12. A system as claimed in claim 11, wherein said mobile object (1) is a ball.

13. A system as claimed in claim 12, wherein said ball is a golf ball.
